# EUROPEAN PATENT SPECIFICATION

(11) **EP 3 038 431 B1**
(45) Date of publication and mention of the grant of the patent: **22.04.2020**
(21) Application number: 15202268.7
(22) Date of filing: 23.12.2015
(51) Int. Cl.: H05B 1/02, H05B 6/06, H05B 6/64, F24C 7/08

(54) **CIRCUIT FOR DRIVING COOKER, SYSTEM FOR DRIVING COOKER, COOKER, AND METHOD FOR DRIVING COOKER**
SCHALTUNG ZUR ANSTEUERUNG EINES KOCHERS, SYSTEM ZUR ANSTEUERUNG EINES KOCHERS, KOCHER UND VERFAHREN ZUR ANSTEUERUNG EINES KOCHERS
CIRCUIT D'ATTAQUE POUR CUISEUR, SYSTÈME D'ENTRAÎNEMENT DE CUISINIÈRE, CUISINIÈRE ET PROCÉDÉ DE PILOTAGE DE CUISINIÈRE

(30) Priority: 26.12.2014 KR 20140191051
(43) Date of publication of application: 29.06.2016
(73) Proprietor: LG Electronics Inc., Seoul 07336 (KR)
(72) Inventor: KIM, Honggyu, Seoul 08592 (KR)
(74) Representative: Ter Meer Steinmeister & Partner

(56) References cited:
- EP-A2- 1 276 351
- WO-A2-2007/139521
- WO-A2-2011/133119
- DE-A1- 10 130 198
- US-A1- 2005 109 333

## Description

### BACKGROUND OF THE INVENTION

### 1. Field of the Invention

The present disclosure relates to a circuit for driving a cooker, a system for driving a cooker, a cooker, and a method for driving a cooker, and particularly, to a system for driving a cooker by supplying power according to a result of sensing a movement of a user, a cooker, and a method for driving a cooker.

### 2. Background of the Invention

A cooker is one of home appliances for cooking food within a container by heating the container using a heat source. Cookers may be classified according hot sources. For example, cookers include a gas range and a gas oven using a gas, and a microwave oven, an electric oven, and an induction heating cooker using electric power. The microwave oven or the electric oven are cookers cooking food using microwaves, in which a microwave generated by a magnetron to which a high voltage is applied is irradiated to a food item within a cooking chamber through a wave guide to vibrate water molecules contained in the food item to generate heat energy , thus cooling the food item.

Cookers are used in most houses such that a power plug connected to a product is connected to an external alternating current (AC) power source, and in this state, a start switch, or the like, is selectively used, and after the cooker is used, the power plug continues to be put in an electrical outlet.

In a state in which the power plug is continuously put in the electric outlet, power is consumed to continuously operate a microcomputer and a display unit for monitoring an operational state of the microwave oven, and when standby power consumption is accumulated for a long period of time, not a little power consumption is caused.

In order to solve the problem, a related art uses a mechanical switch. In this case, however, since the mechanical switch is used, there is a limitation in that the mechanical switch is operated manually, and in order to cut off standby power and supply power, a user should turned on and turned off the switch each time, degrading user convenience.

US 2005/0109333 A1 discloses a safety device for regulating electrical power to a cooking appliance, comprising a control module having a power routing means, a power supply means, a load current sensing means for detecting a load current to the cooking appliance and a power relay means for controlling the electrical current to the cooking appliance, and a sensor module located adjacent to the cooking appliance for observation by an appliance operator and connected to the control module. The sensor module governs the production of the electrical current to the cooking appliance, and has a monitoring means, a distance sensing means, a timer means for showing elapsed cooking time, and a light emitting means. The monitoring means is responsive to outputs of the distance sensing means and includes a timer assembly programmed to a predetermined period of time for responding to the distance sensing means detecting the presence of the appliance operator.

WO 2011/133119 A2 discloses a zero power standby system for controlling electric appliances that is able to wait for switch on instructions without any power consumption. This is done by a remote controller transmitting power in form of either electromagnetic field, light, or audio signal to a power receiving section of a control signal receiving device. The power receiving section will then use the received power to force a multi-switch section to connect between a power supply and a control signal receiving section and a control signal processing section and put the appliance into its usual running mode. When a user desires to turn off the electric appliance, the system stop supplying power to the control signal receiving section and the control signal processing section by turning off multi-switch section and put the electric appliance back to its zero power standby mode.

EP 1 276 351 A2 discloses a microwave oven with a proximity detector for sensing the presence of a person. The operation of the oven is modified in dependence on the presence of a person. For example, the cooking chamber light is turned off when no one is present and the microwave generator is stopped when someone is present.WO 2007/139521 A2 discloses a device for the protection of stand-alone thermic household appliances, especially cooking stoves and hotplates against unwanted consequences of untimely interference and against unwanted interference of children. A household appliance has a sensor provided on its upper external edge detecting presence of a person under an angle of between approx. 30° and approx. 80° upwards, and has a clock or rather a timer with a predetermined switch-off time, preferably 15 minutes, which is triggered by the sensor. When the sensor detects presence of a person, it triggers the clock and unlocks operating controls, when the person removes himself, the sensor locks the operating controls thus starting a time interval.

DE 101 30 198 A1 discloses a stove timer having a lighting display means that is switchable. In order to achieve energy savings and life extension of the display device the stove timer has an integrated sensor, which switches on the lighting via a transmitter, when a user approaches the stove. An evaluation electronics switches off the light with a time delay after the last senses user approach.

In addition, in terms of usage of cookers, in general users do not turn on or turn off the switch each time, and here, in a case in which users do not turn off the switch, standby power is continuously consumed, failing to become a basic alternative for reducing standby power consumption.

### SUMMARY OF THE INVENTION

Therefore, an aspect of the detailed description is to provide a circuit for driving a cooker, capable of reducing standby power consumption and increasing user convenience and stability of a cooker, a system for driving a cooker, a cooker, and a method for driving a cooker.

The above identified problems are solved by the features of the independent claims. Advantageous embodiments are derived from the dependent claims.

In an embodiment of the present disclosure, the sensing unit may be positioned on a front portion of the cooker.

In an embodiment of the present disclosure, the sensing unit may include an infrared sensor configured to infrared-sense a movement of the user.

In an embodiment of the present disclosure, the sensing unit may further include a signal generating unit configured to generate an operation signal regarding controlling of the closing operation of the contact unit according to the sensing result.

In an embodiment of the present disclosure, when a movement of the user of the cooker is sensed for a predetermined period of time, the signal generating unit may generate the operation signal.

Preferably, a cooker may include: a driving unit including a sensing unit configured to sense a movement of a user of a cooker and a contact unit configured to switch a power circuit to which power is supplied from the outside and perform a closing operation on the basis of a sensing result from the sensing unit to receive power; a cooking unit configured to perform a cooking operation of the cooker; and a control unit configured to be driven by power supplied through the power circuit to control operations of the contact unit and the cooking unit.

In an embodiment of the present disclosure, after the control unit is driven by power supplied through the power circuit, the control unit may control the contact unit to maintain the closing operation, whereby power supplied through the power circuit is maintained to maintain driving.

In an embodiment of the present disclosure, after driving of the control unit is maintained by maintaining power supplied through the power circuit, the control unit may control an operation of the cooker.

In an embodiment of the present disclosure, while the control unit controls the operation of the cooker, the control unit may control the contact unit to maintain the closing operation.

In an embodiment of the present disclosure, the sensing of a movement of the user of the cooker may include: infrared-sensing a movement of the user of the cooker; generating an operation signal regarding controlling of the closing operation of the contact unit according to the sensing result; and transmitting the operation signal to the contact unit.

In an embodiment of the present disclosure, in the generating of the operation signal, when a movement of the user of the cooker is sensed for a predetermined period of time, the operation signal may be generated.

In an embodiment of the present disclosure, the maintaining of the driving of the cooking unit and the control unit may include: controlling, by the control unit, an operation of the cooking unit; and controlling, by the control unit, the contact unit to maintain the closing operation, while controlling the operation of the cooking unit.

According to the circuit for driving a cooker, the system for driving a cooker, the cooker, and the method for driving a cooker disclosed in the present disclosure, since power is supplied according to a result of sensing a movement of a user, consumption of standby power may be reduced.

According to the circuit for driving a cooker, the system for driving a cooker, the cooker, and the method for driving a cooker disclosed in the present disclosure, since power is supplied according to a result of sensing a movement of a user, insulation of cooker and electric leakage may be reduced.

According to the circuit for driving a cooker, the system for driving a cooker, the cooker, and the method for driving a cooker disclosed in the present disclosure, since insulation of cooker and electric leakage are reduced, usage stability of a cooker may be increased.

According to the circuit for driving a cooker, the system for driving a cooker, the cooker, and the method for driving a cooker disclosed in the present disclosure, since power is supplied according to a result of sensing a movement of the user, power supply and driving of a cooker may be automatically performed.

According to the circuit for driving a cooker, the system for driving a cooker, the cooker, and the method for driving a cooker disclosed in the present disclosure, since power supply and driving of a cooker are automatically performed, usage convenience of a cooker may be increased.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a view illustrating a configuration of a circuit for driving a cooker disclosed in the present disclosure.
FIG. 2 is a view illustrating a configuration according to an embodiment of a circuit for driving a cooker disclosed in the present disclosure.
FIG. 3 is a view illustrating a configuration of a system for driving a cooker disposed in the present disclosure.
FIG. 4 is a view illustrating a configuration according to an embodiment of a system for driving a cooker disclosed in the present disclosure.
FIG. 5 is a view illustrating a configuration of a cooker disclosed in the present disclosure.
FIG. 6 is a view illustrating a configuration according to an embodiment of a cooker disclosed in the present disclosure.
FIG. 7 is a view illustrating a concept of a circuit configuration according to an embodiment of a cooker disclosed in the present disclosure.
FIG. 8 is a flow chart illustrating a method for driving a cooker disclosed in the present disclosure.
FIG. 9 is a first flow chart illustrating an embodiment of a method for driving a cooker disclosed in the present disclosure.
FIG. 10 is a second flow chart illustrating an embodiment of a method for driving a cooker disclosed in the present disclosure.
FIG. 11 is a third flow chart illustrating an embodiment of a method for driving a cooker disclosed in the present disclosure.

### DETAILED DESCRIPTION OF THE INVENTION

The present disclosure may be applied to a circuit for driving a cooker, a system for driving a cooker, a cooker, and a method for driving a cooker. However, the technique disclosed in the present disclosure is not limited thereto and may be advantageously applied to and implemented in a power circuit and a driving circuit of every existing home appliance, a power circuit and a driving circuit of industrial electric equipment, a power supply device, a power supply system, a driving device, and a driving system of a home appliance and industrial electric equipment, and a power supply method and a driving method of a home appliance and industrial electric equipment to which a technical concept of the present disclosure may be applied.

Terms used in the present specification are used only in order to describe specific exemplary embodiments rather than limiting the present invention.

Hereinafter, the embodiments of the present invention will be described with reference to the accompanying drawings, in which like numbers refer to like elements throughout although the embodiments are different, and a description of the like elements a first embodiment will be used for those of the different embodiment.

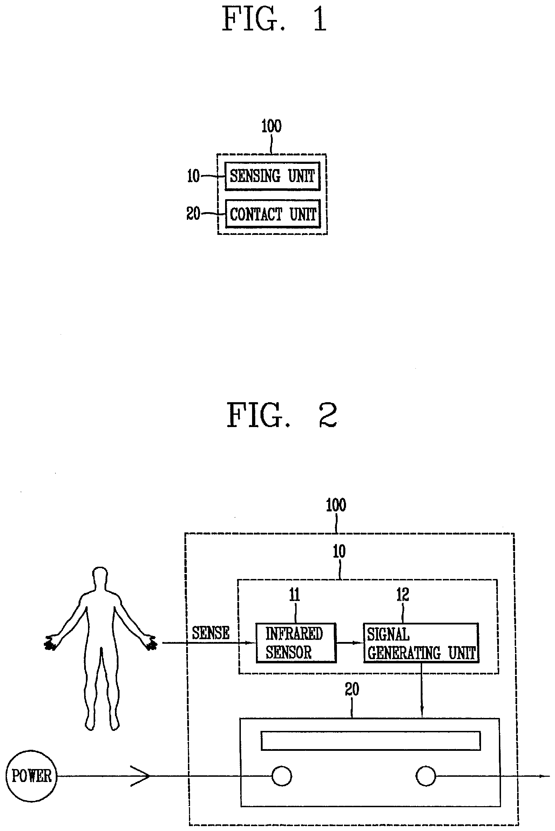

Hereinafter, a circuit for driving a cooker disclosed in the present disclosure will be described with reference to FIGS. 1 and 2.

FIG. 1 is a view illustrating a configuration of a circuit for driving a cooker disclosed in the present disclosure.

FIG. 2 is a view illustrating a configuration according to an embodiment of a circuit for driving a cooker disclosed in the present disclosure.

As illustrated in FIG. 1, a circuit 100 for driving a cooker (hereinafter, referred to as a "driving circuit") includes a sensing unit 10 sensing a movement of a user who uses a cooker and a contact unit 20 switching a power circuit to which power is supplied from the outside and performing a closing operation on the basis of a sensing result from the sensing unit 10 to supply power to the cooker.

The driving circuit 100 refers to a circuit for supplying power to drive the cooker.

The driving circuit 100 may be a circuit included in the cooker.

The driving circuit 100 is a circuit connected to the outside of the cooker and driving the cooker.

The driving circuit 100 may be configured in the form of a module.

In the driving circuit 100, the sensing unit 10 senses a movement of the user of the cooker, and the contact unit 20 performs a closing operation on the basis of the sensing result from the sensing unit 10 so that the power circuit, to which power is supplied from the outside, is closed to allow power to be supplied to the cooker.

As illustrated in FIG. 2, the driving circuit 100 is connected to the power circuit to which power is supplied from the outside, to allow power to be supplied to the cooker.

The sensing unit 10 may be positioned on a front portion of the cooker.

In some implementations, the sensing unit 10 may sense a movement of the user on a front portion of the cooker.

The sensing unit 10 may include an infrared sensor 11 infrared-sensing a movement of the user.

The infrared sensor 11 may be configured to identify movement of the user by sensing infrared light.

The infrared sensor 11 may refer to a passive infrared ray sensor sensing a change in infrared rays according to a movement of a human body and converting the sensed change into an amount of electricity.

The sensing unit 10 may sense a movement of the user on the front portion of the cooker through the infrared sensor 11.

The sensing unit 10 may further include a signal generating unit 12 generating an operation signal regarding controlling of a closing operation of the contact unit 20.

The signal generating unit 12 may be configured to generate the operation signal based on the infrared sensor identifying movement of the user.

In some implementations, the sensing unit 10 may generate the operation signal according to a sensing result from the infrared sensor 11 through the signal generating unit 12.

The signal generating unit 12 may generate the operation signal in a case in which a movement of the user of the cooker is sensed for a predetermined period of time.

The predetermined period of time may be a period of time during which the user is supposed to use the cooker.

For example, the predetermined period of time may be a period of time of 3 seconds or greater.

The sensing unit 10 may sense a movement of the user on the front portion of the cooker for a predetermined period of time through the infrared sensor 11, and in some implementations, in which a movement of the user is sensed for the predetermined period of time, since the user is supposed to use the cooker, the sensing unit 10 may generate the operation signal according to the sensing result for the predetermined period of time through the signal generating unit 12.

The sensing unit 10 may generate the operation signal and transmit the generated operation signal to the contact unit 20.

The contact unit 20 is configured to disconnect power that is received.

The contact unit 20 is configured to provide to the cooker, power that is received from the power circuit in response to the operation signal from the sensing unit.

The contact unit 20 may receive the operation signal from the sensing unit 10.

The contact unit 20 switches the power circuit supply power from the outside to the cooker, so that power may be supplied to the cooker or power supply to the cooker may be cut off.

The contact unit 20 may be an physical contact (a contact or switch) which is open at normal times and which is closed at the time of operation, or the contact unit 20 may comprise a switch that is configured to be open except during operation of the cooker and is configured to close in response to the operation signal.

The contact unit 20 is open at normal times not to supply power to the cooker, and is closed at the time of operation to supply power to the cooker.

Upon receiving the generated operation signal from the sensing unit 10, the contact unit 20 may perform a closing operation on the basis of the operation signal.

Upon receiving the operation signal, which has been generated on the basis of a result of sensing a movement of the user on the front portion of the cooker for a predetermined period of time, from the sensing unit 10, the contact unit 20 may perform a closing operation to supply power to the cooker.

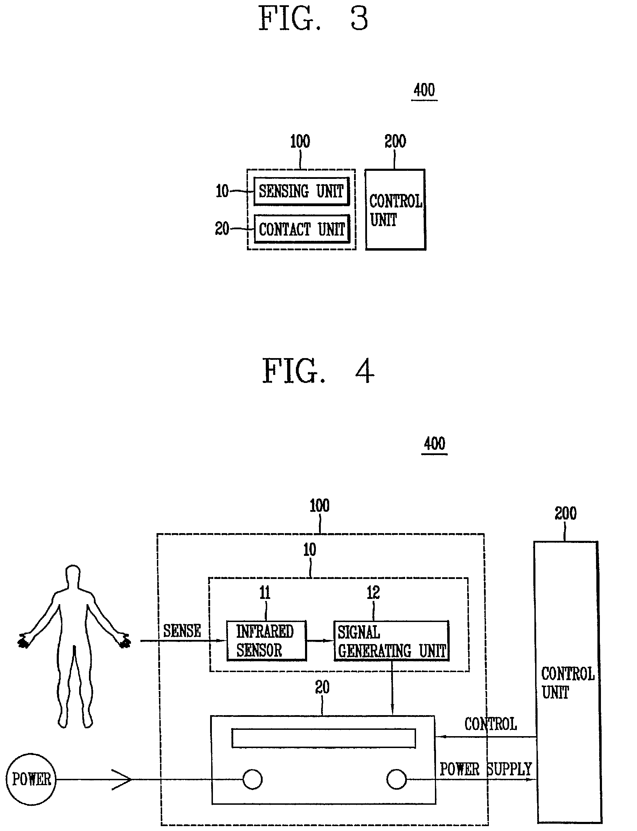

FIGS. 3 and 4 illustrate example systems for driving a cooker.

As illustrated in FIG. 3, a system 400 for driving a cooker (hereinafter, referred to as a "driving system") includes a driving unit 100 including a sensing unit 10 sensing a movement of a user and a contact unit 20 switching a power circuit to which power is supplied from the outside, and performing a closing operation on the basis of a sensing result from the sensing unit 10 to supply power to the cooker, and a control unit 200 driven by power supplied from the power circuit to control an operation of the contact unit 20.

The driving system 400 refers to a circuit system for driving the cooker.

The driving system 400 may refer to a system including a plurality of circuits included in the cooker.

The driving system 400 is a system including the driving circuit 100 described above.

In the driving system 400, the driving unit 100 allows power for driving the cooker to be supplied to the cooker, and the control unit 200 is driven by power supplied through the driving unit 100 to control an operation of the contact unit 20 .

The driving unit 100 may be a circuit included in the cooker.

The driving unit 100 is a circuit connected to the outside of the cooker to enable the cooker to be driven.

The driving unit 100 may be configured in the form of a module.

The control unit 200 may be a circuit included in the cooker.

The control unit 200 may be a micro controller unit (MCU) controlling driving and an operation of the cooker.

In the driving unit 100, the sensing unit 10 senses a movement of the user of the cooker, and the contact unit 20 performs a closing operation on the basis of the sensing result from the sensing unit 10 so that the power circuit, to which power is supplied from the outside, is closed to allow power to be supplied to the cooker.

As illustrated in FIG. 4, the driving circuit 100 is connected to the power circuit to which power is supplied from the outside, to allow power to be supplied to the cooker including the control unit 200.

The sensing unit 10 may be positioned on a front portion of the cooker.

The sensing unit 10 may infrared-sense a movement of the user of the cooker and generate an operation signal regarding controlling of a closing operation of the contact unit 20 according to the sensing result.

The sensing unit 10 may be configured to output the operation signal based on sensed movement of a user.

The sensing unit 10 may include an infrared sensor 11 infrared-sensing a movement of the user.

The infrared sensor 11 may refer to a passive infrared ray sensor sensing a change in infrared rays according to a movement of a human body and converting the sensed change into an amount of electricity.

The sensing unit 10 may sense a movement of the user on the front portion of the cooker through the infrared sensor 11.

The sensing unit 10 may further include a signal generating unit 12 generating an operation signal regarding controlling of a closing operation of the contact unit 20.

When a movement of the user of the cooker is sensed for a predetermined period of time, the sensing unit 10 may generate the operation signal though the signal generating unit 12.

The predetermined period of time may be a period of time during which the user is supposed to use the cooker.

For example, the predetermined period of time may be a period of time of 3 seconds or greater.

In some implementations, the sensing unit 10 senses a movement of the user on the front portion of the cooker for a predetermined period of time through the infrared sensor 11, and in some implementations, in which a movement of the user is sensed for the predetermined period of time, since the user is supposed to use the cooker, the sensing unit 10 may generate the operation signal according to the sensing result for the predetermined period of time through the signal generating unit 12.

The sensing unit 10 may generate the operation signal and transmit the generated operation signal to the contact unit 20.

The contact unit 20 may receive the operation signal from the sensing unit 10.

The contact unit 20 switches the power circuit supplying power from the outside to the cooker, so that power may be supplied to the cooker or power supply to the cooker may be cut off.

The contact unit 20 supplies power to the cooker to enable the control unit 200 to be driven.

The contact unit 20 may be an physical contact (a contact or switch) which is open at normal times and which is closed at the time of operation.

The contact unit 20 is open at normal times not to supply power to the cooker, and is closed at the time of operation to supply power to the cooker.

Upon receiving the generated operation signal from the sensing unit 10, the contact unit 20 performs a closing operation on the basis of the operation signal and maintains the closing operation on the basis of a signal generated by the control unit 200.

In some implementations, the contact unit 10 may receive the operation signal, which has been generated on the basis of a result of sensing a movement of the user on the front portion of the cooker for a predetermined period of time, from the sensing unit 10, perform a closing operation on the basis of the operation signal to supply power to the cooker, and maintain the closing operation under the control of the control unit 200 which is driven upon receiving power.

The contact unit 20 maintains the closing operation on the basis of the signal generated by the control unit 200 to maintain power supply to the cooker.

The contact unit 20 is returned to an open state when there is no signal generated by the sensing unit 10 or the control unit 200.

In some implementations, power supply to the cooker is not required so a signal is not generated by the sensing unit 10 or the control unit 200, the contact unit 20 may be returned from the closing operation to a previous state (e.g., an open state) so that power may not be supplied.

The control unit 200 is driven by power supplied through the power circuit.

The control unit 200 is configured to, based on the control unit 200 controlling the operation of the cooker, maintain the contact unit 20 in a closed position.

After the control unit 200 is driven by power supplied through the power circuit, the control unit 200 may generate a sustain signal for controlling maintaining the closing operation of the contact unit 20.

In some implementations, after the control unit 200 is driven by power supplied through the power circuit, the control unit 200 generates the sustain signal to maintain power supply through the power circuit to thus control the contact unit 20.

The control unit 200 controls the contact unit 20 to maintain the closing operation, whereby power supplied through the power circuit may be maintained to maintain the driving.

After the power supplied through the power circuit is maintained to maintain the driving, the control unit 200 may control an operation of the cooker.

In some implementations, since the control unit 200 is driven upon receiving power through the power circuit, the control unit 200 may control driving and operation of the cooker.

The control unit 200 may control an operation of the cooker such that a cooking function of the cooker is executed.

For example, the control unit may control an operation of the cooker to perform a cooking function corresponding to a user input.

While controlling the operation of the cooker, the control unit 200 may control the contact unit 20 to maintain the closing operation of the contact unit 20.

In some implementations, while the cooking function of the cooker is being performed, the control unit 200 may control the contact unit 20 to maintain the closing operation of the contact unit 20 such that power supply to the cooker is maintained.

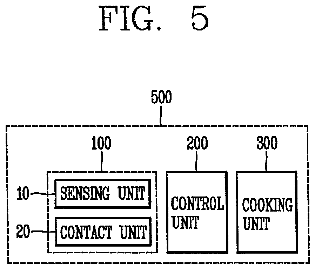

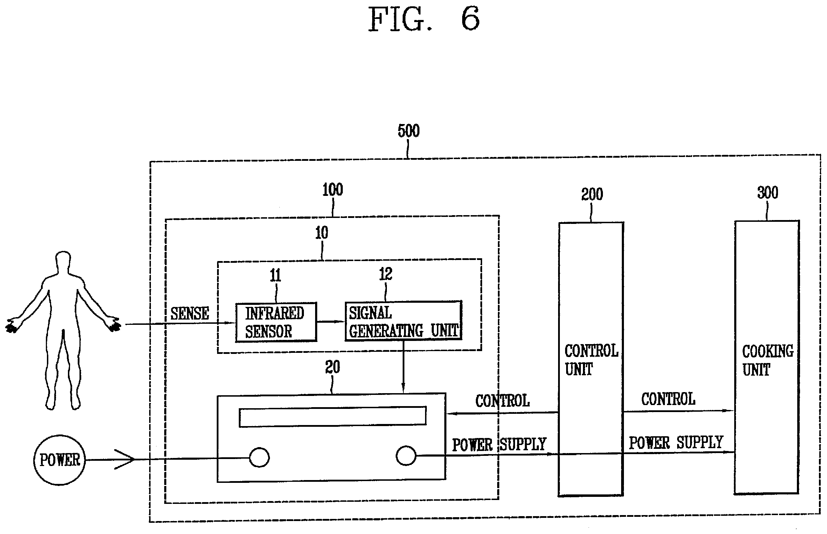

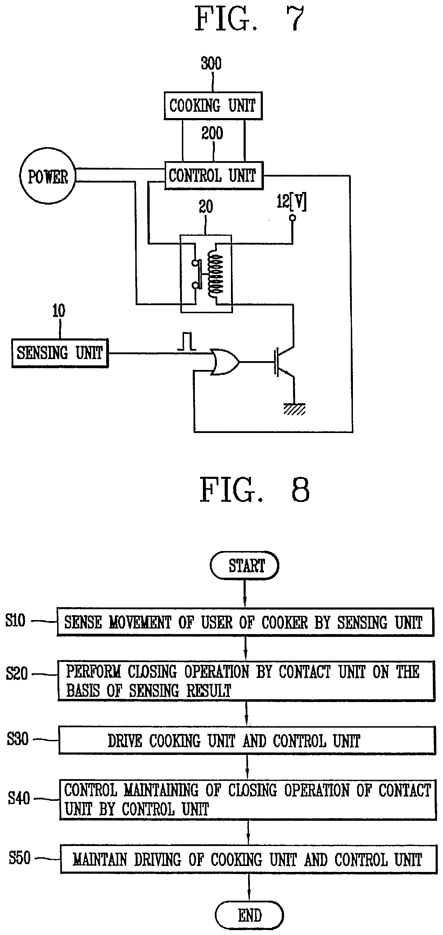

FIGS. 5 and 6 illustrate of example cookers. FIG. 7 illustrates an example circuit of a cooker.

As illustrated in FIG. 5, the cooker 500 includes a driving unit 100 including a sensing unit 10 sensing a movement of a user who uses a cooker and a contact unit 20 switching a power circuit to which power is supplied from the outside and performing a closing operation on the basis of a sensing result from the sensing unit 10 to receive power, a cooking unit 300 performing a cooking operation of the cooker 500, and a control unit 200 driven by power supplied through the power circuit to control operations of the contact unit 20 and the cooking unit 300.

The cooker 500 may refer to a device for cooking food using an electric energy, such as a microwave oven, an oven, or an induction heating (IH) cooker.

The cooker 500 may include a plurality of circuits to perform a cooking function.

The cooker 500 may include the driving circuit 100 or the driving system 400 described above.

In the cooker 500, the driving unit 100 receives power for driving the cooker 500, the cooking unit 300 is driven by power received through the driving unit 100 to perform a cooking operation such that a cooking function of the cooker 500 may be performed, and the control unit 200 may be driven by power received through the driving unit 100 to control operations of the contact unit 20 and the cooking unit 300.

The control unit 200 may be a micro controller unit (MCU) controlling driving and an operation of the cooker 500.

The cooking unit 300 may be driven by the driving system 400 to perform a cooking operation of the cooker 500.

In some implementations, the cooker 500 includes the driving system 400 performing driving and the cooking unit 300 performing cooking, and the cooking unit 300 is driven through the driving system 400 to perform cooking.

In the driving unit 100, the sensing unit 10 senses a movement of the user of the cooker 500, and the contact unit 20 performs a closing operation on the basis of the sensing result from the sensing unit 10 so that the power circuit, to which power is supplied from the outside, is closed to receive power.

As illustrated in FIG. 6, the driving circuit 100 is connected to the power circuit to which power is supplied from the outside, to allow power to be supplied to the cooker including the control unit 200.

The sensing unit 10 may be positioned on a front portion of the cooker.

The sensing unit 10 may infrared-sense a movement of the user of the cooker and generate an operation signal regarding controlling of a closing operation of the contact unit 20 according to the sensing result.

The sensing unit 10 may include an infrared sensor 11 infrared-sensing a movement of the user.

The infrared sensor 11 may refer to a passive infrared ray sensor sensing a change in infrared rays according to a movement of a human body and converting the sensed change into an amount of electricity.

The sensing unit 10 may sense a movement of the user on the front portion of the cooker through the infrared sensor 11.

The sensing unit 10 may further include a signal generating unit 12 generating an operation signal regarding controlling of a closing operation of the contact unit 20.

When a movement of the user of the cooker 500 is sensed for a predetermined period of time, the sensing unit 10 may generate the operation signal though the signal generating unit 12.

The predetermined period of time may be a period of time during which the user is supposed to use the cooker.

For example, the predetermined period of time may be a period of time of 3 seconds or greater.

In some implementations, the sensing unit 10 senses a movement of the user on the front portion of the cooker for a predetermined period of time through the infrared sensor 11, and in some implementations, in which a movement of the user is sensed for the predetermined period of time, since the user is supposed to use the cooker, the sensing unit 10 may generate the operation signal according to the sensing result for the predetermined period of time through the signal generating unit 12.

The sensing unit 10 may generate the operation signal and transmit the generated operation signal to the contact unit 20.

The contact unit 20 may receive the operation signal from the sensing unit 10.

The contact unit 20 switches the power circuit supplying power from the outside to the cooker 500, so that power may be supplied or cut off.

The contact unit 20 may allow power to be supplied to enable the cooking unit 300 and the control unit 200 to be driven.

The contact unit 20 may be an physical contact (a contact or switch) which is open at normal times and which is closed at the time of operation.

The contact unit 200 is open at normal times to prevent power from being supplied, and is closed at the time of operation to allow power to be supplied.

The contact unit 20 may receive the generated operation signal from the sensing unit 10, perform a closing operation on the basis of the operation signal, and maintain the closing operation on the basis of a signal generated by the control unit 200.

In some implementations, the contact unit 10 may receive the operation signal, which has been generated on the basis of a result of sensing a movement of the user on the front portion of the cooker 500 for a predetermined period of time, from the sensing unit 10 and perform a closing operation to allow power to be supplied, and when the control unit 200 is driven upon receiving power, the contact unit 10 may maintain the closing operation under the control of the control unit 200.

The contact unit 20 maintains the closing operation on the basis of a signal generated by the control unit 200, such that power supply to the cooking unit 300 and the control unit 200 is maintained.

The contact unit 20 is returned to an open state when there is no signal generated by the sensing unit 10 or the control unit 200.

In some implementations, power supply is not required so a signal is not generated by the sensing unit 10 or the control unit 200, the contact unit 20 may be returned from the closing operation to the open state so that power may not be supplied.

The cooking unit 300 is driven by power supplied through the power circuit.

After the cooking unit is driven by power supplied through the power circuit, an operation of the cooking unit 300 may be controlled by the control unit 200.

The cooking unit 300 may perform a cooking operation on food as a cooking target.

The cooking unit 300 may be controlled by the control unit to perform a cooking function to heat food.

For example, when the cooker 500 is an induction heating (IH) cooker, the control unit 200 may control the cooking unit 300 to heat a cooking container positioned at an upper portion of the cooker 500 to 100°C.

The control unit 200 is driven by power supplied through the power circuit.

After the control unit 200 is driven by power supplied through the power circuit, the control unit 200 may generate a sustain signal for controlling maintaining the closing operation of the contact unit 20.

In some implementations, after the control unit 200 is driven by power supplied through the power circuit, the control unit 200 generates the sustain signal to maintain power supply through the power circuit to thus control the contact unit 20.

After the control unit 200 is driven by power supplied through the power circuit, the control unit 200 may control the contact unit 20 to maintain the closing operation, whereby power supplied through the power circuit may be maintained to maintain the driving.

After the power supplied through the power circuit is maintained to maintain the driving, the control unit 200 may control an operation of the cooking unit 300.

In some implementations, since the control unit 200 is driven upon receiving power through the power circuit, the control unit 200 may control driving and operation of the cooker.

The control unit 200 may control an operation of the cooker such that a cooking function of the cooker is executed.

For example, the control unit may control an operation of the cooker to perform a cooking function corresponding to a user input.

While controlling the operation of the cooker, the control unit 200 may control the contact unit 20 to maintain the closing operation of the contact unit 20.

In some implementations, while the cooking function of the cooker is being performed, the control unit 200 may control the contact unit 20 to maintain the closing operation of the contact unit 20 such that power supply to the cooker is maintained.

A circuit configuration of the cooker 500 described above may have a form as illustrated in FIG. 7.

As illustrated in FIG. 7, in the cooker 500, the contact unit 20 of the driving unit performs a closing operation on the basis of signals generated by the sensing unit 10 of the driving unit 100 and the control unit 200.

The sensing unit 10, the control unit 200, and the contact unit 20 is configured as an OR gate in which an output is performed when there are one or more inputs.

The sensing unit 10 and the control unit 200 are connected to an input of the OR gate, and an output of the OR gate is connected to the contact unit 20, and accordingly, when the sensing unit 10 or the control unit 200 generates a signal, the contact unit 20 may perform a closing operation.

As for a process of driving the cooker 500, when the sensing unit 10 senses a movement of the user on a front portion of the cooker 500, the sensing unit 10 generates the operation signal, and when the operation signal is transmitted to the contact unit 20, the contact unit 20 performs a closing operation such that the power circuit to which power is supplied from the outside is closed. Since the power circuit is closed, power is supplied to the cooking unit 300 and the control unit 200, and thus, the control unit 200 may be driven.

After the control unit 200 is driven, the control unit 200 generates the sustain signal to maintain the closing operation of the contact unit 20 in order to continuously receive power, and when the sustain signal is transmitted to the contact unit 20, the contact unit 20 maintains the closing operation, and thus, power supply to the control unit 200 is maintained, whereby driving of the control unit 200 may be maintained.

After driving of the control unit 200 is maintained, the control unit 200 controls an operation of the cooking unit 300 to perform a cooking function of the cooker 500, and in order to continuously receive power while the cooking unit 300 is being operated, the control unit 200 may control the contact unit 200 to maintain the closing operation.

When a signal is not generated by the sensing unit 10 and the control unit 200, it is a situation in which driving of the cooker 500 is not required. Thus, the contact unit 20 is returned from the closing operation and the power circuit is open such that power supply to the cooker 500 may be cut off.

Through the driving of the process described above, when a cooking function is not performed (e.g., when power supply is not required), the power circuit is opened and power is not supplied, and thus, consumption of standby power of the cooker 500 may be reduced and convenience of the user of the cooker 500 and stability may be increased.

FIGS. 8-11 illustrate example methods for driving a cooker.

A method for driving a cooker (hereinafter, referred to as a "driving method") is a method for driving the cooker 500 including the sensing unit 10 sensing a movement of a user of the cooker 500, the cooking unit 300 performing a cooking operation of the cooker 500, and the control unit 200 driven by power supplied through the power circuit to control operations of the contact unit 20 and the cooking unit 300.

The driving method may be the method for driving the cooker 500 described above.

As illustrated in FIG. 8, the driving method includes: step (S10) in which the sensing unit 10 senses a movement of a user of the cooker 500, step (S20) in which the contact unit 20 performs a closing operation on the basis of the sensing result, step (S30) in which the cooking unit 300 and the control unit 200 are driven with power supplied through the power circuit, step (S40) in which the control unit 200 controls an operation of the contact unit 20 to maintain the closing operation, and step (S50) in which driving of the cooking unit 300 and the control unit 200 is maintained by maintaining power supplied through the power circuit.

Step (S10) of sensing a movement of a user of the cooker 500 is performed by the sensing unit 10.

In step (S10) of sensing a movement of the user of the cooker 500, a movement of the user on the front portion of the cooker 500 may be sensed through the sensing unit 10 positioned on the front portion of the cooker 500.

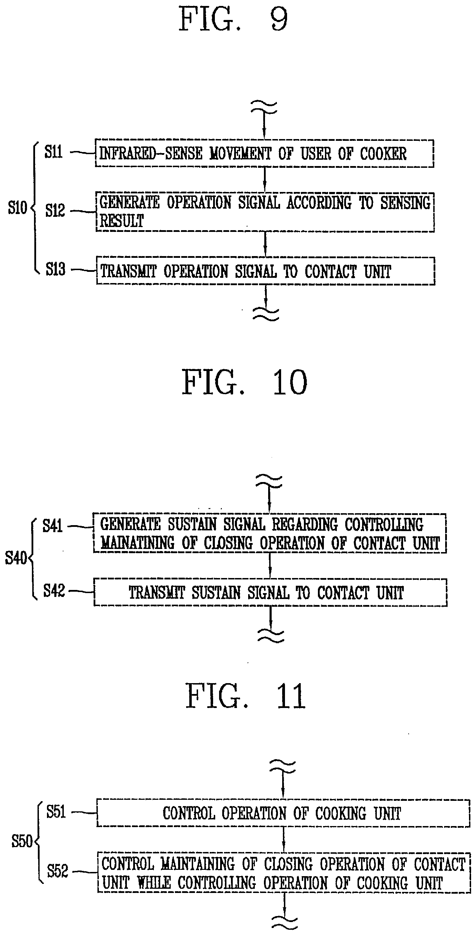

As illustrated in FIG. 9, step (S10) of sensing a movement of the user of the cooker 500 may include step (S11) of infrared-sensing a movement of the user of the cooker 500, step (S12) of generating an operation signal regarding controlling of a closing operation of the contact unit 20 according to the sensing result, and step (S13) of transmitting the operation signal to the contact unit 20.

In step (S11) of infrared-sensing a movement of the user of the cooker 500, the sensing unit 10 may infrared-sense a movement of the user on the front portion of the cooker 500.

In step (S12) of generating an operation signal, the sensing unit 10 may generate an operation signal regarding controlling of a closing operation of the contact unit 20 according to the sensing result.

In step (S12), when a movement of the user of the cooker 500 is sensed for a predetermined period of time, the sensing unit 10 may generate the operation signal.

The predetermined period of time may be a period of time during which the user is supposed to use the cooker 500.

For example, the predetermined period of time may be a period of time of three seconds or more.

In step (S13) of transmitting the operation signal to the contact unit 20, the sensing unit 10 transmits the operation signal to the contact unit 20.

Step (S20) of performing a closing operation on the basis of the sensing result is performed through the contact unit 20.

In step (S20) of performing a closing operation on the basis of the sensing result, the contact unit 20 performs a closing operation on the basis of a signal transmitted from the sensing unit 10 to close the power circuit which receives power from the outside.

In step (S20) of performing a closing operation on the basis of the sensing result, the contact unit 20 switches the power circuit which receives power from the outside to supply power to the cooking unit 300 and the control unit 200 or to cut off power supply thereto.

Step (S30) of driving the cooking unit 300 and the control unit 200 is performed through the cooking unit 300 and the control unit 200 upon receiving power as the contact unit 20 performs a closing operation.

In step (S30) of driving the cooking unit 300 and the control unit 200, the cooking unit 300 and the control unit 200 is provided with power so as to be driven.

Step (S40) of controlling an operation of the contact unit 20 is performed through the control unit 200.

As illustrated in FIG. 10, step (S40) of controlling an operation of the contact unit 20 may include step (S41) of generating a sustain signal regarding controlling of maintaining a closing operation of the contact unit 20 and step (S42) of transmitting the sustain signal to the contact unit 20.

In step (S41) of generating a sustain signal, after the control unit 200 is driven by power supplied through the power circuit, the control unit 200 may generate a sustain signal regarding controlling of maintaining the closing operation of the contact unit 20.

In step (S42) of transmitting the sustain signal to the contact unit 20, the control unit 20 may transmit the sustain signal to the contact unit 20.

In some implementations, in step (S40) of controlling the operation of the contact unit 20, after the controller 200 is driven with power supplied through the power circuit, the control unit 200 may generate the sustain signal to maintain power supply through the power circuit to thus control the contact unit 20.

Step (S50) of maintaining driving of the cooking unit 300 and the control unit 200 is performed through the control unit 200 maintained in driving as power supplied through the power circuit is maintained.

In step (S50) of maintaining driving of the cooking unit 300 and the control unit 200, the contact unit 20 maintains the closing operation on the basis of a signal generated by the control unit 200 such that power supply to the cooking unit 300 and the control unit 200 is maintained.

Step (S50) of maintaining driving of the cooking unit 300 and the control unit 200 may include step (S51) in which the control unit 200 controls an operation of the cooking unit 300 and step (S52) in which, while the control unit 200 controls the operation of the cooking unit 300, the control unit 200 controls the contact unit 20 to maintain the closing operation.

In step (S51) of controlling an operation of the cooking unit 300, in a state in which driving of the control unit 200 is maintained by maintaining power supplied through the power circuit, an operation of the cooking unit 300 may be controlled.

In step (S51) of controlling an operation of the cooking unit 300, the control unit 200 may control an operation of the cooking unit 300 such that a cooking function of the cooker 500 is performed.

Step (S52) of controlling the contact unit 20 to maintain the closing operation, while the control unit 200 controls an operation of the cooking unit 300, the contact unit 20 may be controlled to maintain the closing operation.

In some implementations, in step (S50) of maintaining driving of the cooking unit 300 and the control unit 200, the control unit 200 is driven upon receiving power through the power circuit to control driving and an operation of the cooker 500.

In some implementations, the circuit for driving a cooker, the system for driving a cooker, the cooker, and the method for driving a cooker disclosed in the present disclosure may be applied to and implemented in power circuits and driving circuits of home appliances and power circuits and driving circuits of industrial electric equipment.

In some implementations, the circuit for driving a cooker, the system for driving a cooker, the cooker, and the method for driving a cooker disclosed in the present disclosure may be applied to and implemented in power supply devices, power supply systems, driving devices, and driving system of home appliances and industrial electric equipment.

In some implementations, the circuit for driving a cooker, the system for driving a cooker, the cooker, and the method for driving a cooker disclosed in the present disclosure may be applied to and implemented power supply methods and driving methods of home appliances and industrial electric equipment.

In some implementations, the circuit for driving a cooker, the system for driving a cooker, the cooker, and the method for driving a cooker disclosed in the present disclosure may be applied to and implemented in induction heating cookers using electric energy.

According to the circuit for driving a cooker, the system for driving a cooker, the cooker, and the method for driving a cooker disclosed in the present disclosure, since power is supplied according to a result of sensing a movement of a user, consumption of standby power may be reduced.

According to the circuit for driving a cooker, the system for driving a cooker, the cooker, and the method for driving a cooker disclosed in the present disclosure, since power is supplied according to a result of sensing a movement of a user, insulation of cooker and electric leakage may be reduced.

According to the circuit for driving a cooker, the system for driving a cooker, the cooker, and the method for driving a cooker disclosed in the present disclosure, since insulation of cooker and electric leakage are reduced, usage stability of a cooker may be increased.

According to the circuit for driving a cooker, the system for driving a cooker, the cooker, and the method for driving a cooker disclosed in the present disclosure, since power is supplied according to a result of sensing a movement of the user, power supply and driving of a cooker may be automatically performed.

According to the circuit for driving a cooker, the system for driving a cooker, the cooker, and the method for driving a cooker disclosed in the present disclosure, since power supply and driving of a cooker are automatically performed, usage convenience of a cooker may be increased.

## Claims

1. A system (400) for driving a cooker (500), the system (400) comprising:
a driving unit (100) including a sensing unit (10) configured to sense a movement of a user of a cooker (500) and a contact unit (20) configured to switch a power circuit to which power is supplied from the outside and perform a closing operation on the basis of a sensing result from the sensing unit (10) to allow power to be supplied to the cooker (500); and
a control unit (200) configured to be driven by power supplied through the power circuit to control an operation of the contact unit (20),
**characterized in that**
the contact unit (20) is a normally-open contact that is closed at a time of operation;
the contact unit (20) is configured to perform the closing operation on the basis of an operation signal generated by the sensing unit (10) and to maintain the closing operation on the basis of a signal generated by the control unit (200);
wherein when no signal is generated by the sensing unit (10) or the control unit (200), the contact unit (20) is returned from the closing operation to an open state so that power to the control unit (200) is cut off;
wherein the sensing unit (10), the control unit (200), and the contact unit (20) are connected to an OR gate in which an output is performed when there are one or more inputs,
wherein the sensing unit (10) and the control unit (200) are connected to different inputs of the OR gate, and an output of the OR gate is connected to the contact unit (20), and
wherein when the sensing unit (10) or the control unit (200) generates a signal, the contact unit (20) performs the closing operation.

2. The system (400) of claim 1, wherein the sensing unit (10) is positioned on a front portion of the cooker (500), infrared-senses a movement of the user of the cooker (500) and generates the operation signal regarding controlling of the closing operation of the contact unit(20) according to the sensing result.

3. The system (400) of one of claims 1 and 2, wherein when a movement of the user of the cooker (500) is sensed for a predetermined period of time, the sensing unit (10) generates the operation signal.

4. A cooker (500) comprising:
the system (400) according to one of the claims 1 to 3; and
a cooking unit (300) configured to perform a cooking operation of the cooker (500).

5. The cooker (500) of claim 4, wherein after the control unit (200) is driven by power supplied through the power circuit, the control unit (200) controls the contact unit (20) to maintain the closing operation, and as the driving of the control unit (200) is maintained by maintaining power supplied through the power circuit, the control unit (200) controls an operation of the cooker (500).

6. The cooker (500) of claim 5, wherein while the control unit (200) controls the operation of the cooker (500), the control unit (200) controls the contact unit (20) to maintain the closing operation.

7. A method for driving a cooker (500) including: a driving unit (100) including a sensing unit(10) configured to sense a movement of a user of a cooker (500) and a contact unit (20) configured to switch a power circuit to which power is supplied from the outside; a cooking unit (300) configured to perform a cooking operation of the cooker (500); and a control unit (200) configured to be driven by power supplied through the power circuit to control operations of the contact unit (20) and the cooking unit (200), the method comprising:
sensing, by the sensing unit (10), a movement of a user of the cooker (500);
performing, by the contact unit (20), a closing operation on the basis of the sensing result;
driving the cooking unit (300) and the control unit (200) with power supplied through the power circuit;
controlling, by the control unit (200), an operation of the contact unit (20) to maintain the closing operation; and
maintaining driving of the cooking unit (300) and the control unit (200) by maintaining power supplied through the power circuit,
the method being **characterized by**
the contact unit (20) being a normally-open contact that closes at a time of operation;
performing, by the contact unit (20), the closing operation on the basis of an operation signal generated by the sensing unit (10) and maintaining, by the contact unit (20), the closing operation on the basis of a signal generated by the control unit (200);
wherein when no signal is generated by the sensing unit (10) or the control unit (200), returning the contact unit (20) from the closing operation to an open state so that power to the control unit (200) is cut off;
wherein the sensing unit (10), the control unit (200), and the contact unit (20) are connected to an OR gate in which an output is performed when there are one or more inputs,
wherein the sensing unit (10) and the control unit (200) are connected to different inputs of the OR gate, and an output of the OR gate is connected to the contact unit (20), and
wherein when the sensing unit (10) or the control unit (200) generates a signal, the contact unit (20) performs the closing operation.

8. The method of claim 7, wherein the sensing of a movement of the user of the cooker (500) comprises:
infrared-sensing a movement of the user of the cooker (500);
generating an operation signal regarding controlling of the closing operation of the contact unit (20) according to the sensing result; and
transmitting the operation signal to the contact unit (20).

9. The method of claim 8, wherein, in the generating of the operation signal, when a movement of the user of the cooker (500) is sensed for a predetermined period of time, the operation signal is generated.

10. The method of one of claims 7 to 9, wherein the controlling of the operation of the contact unit (20) comprises:
generating a sustain signal regarding controlling maintaining of the closing operation of the contact unit (20); and
transmitting the sustain signal to the contact unit (20).

11. The method of one of claims 7 to 10, wherein the maintaining of the driving of the cooking unit (300) and the control unit (200) comprises:
controlling, by the control unit (200), an operation of the cooking unit (300); and
controlling, by the control unit (200), the contact unit (20) to maintain the closing operation, while controlling the operation of the cooking unit (300).

## Patentansprüche

1. System (400) zum Ansteuern eines Kochgeräts (500), wobei das System (400) Folgendes umfasst:
eine Ansteuereinheit (100), die eine Messeinheit (10), die konfiguriert ist, eine Bewegung eines Benutzers eines Kochgeräts (500) zu messen, und eine Kontakteinheit (20), die konfiguriert ist, einen Stromkreis, dem Leistung von außen zugeführt wird, zu schalten und einen Einschaltvorgang auf der Basis eines Messergebnisses von der Messeinheit (10) durchzuführen, damit dem Kochgerät (500) Leistung zugeführt werden kann, umfasst; und
eine Steuereinheit (200), die konfiguriert ist, durch Leistung angesteuert zu werden, die durch den Stromkreis zugeführt wird, um einen Betrieb der Kontakteinheit (20) zu steuern,
**dadurch gekennzeichnet, dass**
die Kontakteinheit (20) ein normalerweise offener Kontakt ist, der während einer Betriebszeit geschlossen ist;
die Kontakteinheit (20) konfiguriert ist, den Einschaltvorgang auf der Basis eines Betriebssignals durchzuführen, das durch die Messeinheit (10) erzeugt wird, und den eingeschalteten Zustand auf der Basis eines Signals, das durch die Steuereinheit (200) erzeugt wird, aufrechtzuerhalten;
wobei dann, wenn durch die Messeinheit (10) oder die Steuereinheit (200) kein Signal erzeugt wird, die Kontakteinheit (20) von dem eingeschalteten Zustand in einen offenen Zustand zurückkehrt, so dass Leistung für die Steuereinheit (200) ausgeschaltet wird;
wobei die Messeinheit (10), die Steuereinheit (200) und die Kontakteinheit (20) mit einem ODER-Gatter verbunden sind, bei dem eine Signalausgabe ausgeführt wird, wenn es ein oder mehrere Eingangssignale gibt,
wobei die Messeinheit (10) und die Steuereinheit (200) mit verschiedenen Eingängen des ODER-Gatters verbunden sind und wobei ein Ausgang des ODER-Gatters mit der Kontakteinheit (20) verbunden ist, und
wobei dann, wenn die Messeinheit (10) oder die Steuereinheit (200) ein Signal erzeugt, die Kontakteinheit (20) den Einschaltvorgang durchführt.

2. System (400) nach Anspruch 1, wobei die Messeinheit (10) an einem vorderen Abschnitt des Kochgeräts (500) positioniert ist, eine Bewegung des Benutzers des Kochgeräts (500) mittels Infrarot misst und das Betriebssignal bezüglich der Steuerung des Einschaltvorgangs der Kontakteinheit (20) in Übereinstimmung mit dem Messergebnis erzeugt.

3. System (400) nach einem der Ansprüche 1 und 2, wobei dann, wenn eine Bewegung des Benutzers des Kochgeräts (500) für eine festgelegte Zeitspanne gemessen wird, die Messeinheit (10) das Betriebssignal erzeugt.

4. Kochgerät (500), das Folgendes umfasst:
das System (400) nach einem der Ansprüche 1 bis 3; und
eine Kocheinheit (300), die konfiguriert ist, einen Kochbetrieb des Kochgeräts (500) durchzuführen.

5. Kochgerät (500) nach Anspruch 4, wobei dann, nachdem die Steuereinheit (200) durch Leistung angesteuert wird, die durch den Stromkreis zugeführt wird, die Steuereinheit (200) die Kontakteinheit (20) steuert, den eingeschalteten Zustand aufrechtzuerhalten, und wobei dann, wenn das Ansteuern der Steuereinheit (200) aufrechterhalten wird, indem Leistung, die durch den Stromkreis zugeführt wird, aufrechterhalten wird, die Steuereinheit (200) einen Betrieb des Kochgeräts (500) steuert.

6. Kochgerät (500) nach Anspruch 5, wobei dann, wenn die Steuereinheit (200) den Betrieb des Kochgeräts (500) steuert, die Steuereinheit (200) die Kontakteinheit (20) steuert, den eingeschalteten Zustand aufrechtzuerhalten.

7. Verfahren zum Ansteuern eines Kochgeräts (500), das Folgendes umfasst: eine Ansteuereinheit (100), die eine Messeinheit (10), die konfiguriert ist, eine Bewegung eines Benutzers eines Kochgeräts (500) zu messen, und eine Kontakteinheit (20), die konfiguriert ist, einen Stromkreis, dem von außen Leistung zugeführt wird, zu schalten, umfasst; eine Kocheinheit (300), die konfiguriert ist, einen Kochbetrieb des Kochgeräts (500) durchzuführen; und eine Steuereinheit (200), die konfiguriert ist, durch Leistung angesteuert zu werden, die durch den Stromkreis zugeführt wird, um den Betrieb der Kontakteinheit (20) und der Kocheinheit (200) zu steuern, wobei das Verfahren die folgenden Schritte umfasst:
Messen einer Bewegung eines Benutzers des Kochgeräts (500) durch die Messeinheit (10);
Durchführen eines Einschaltvorgangs durch die Kontakteinheit (20) auf der Basis des Messergebnisses;
Ansteuern der Kocheinheit (300) und der Steuereinheit (200) mit Leistung, die durch den Stromkreis zugeführt wird;
Steuern eines Betriebs der Kontakteinheit (20) durch die Steuereinheit (200), um den eingeschalteten Zustand aufrechtzuerhalten; und
Aufrechterhalten der Ansteuerung der Kocheinheit (300) und der Steuereinheit (200) durch das Aufrechterhalten von Leistung, die durch den Stromkreis zugeführt wird,
wobei das Verfahren **dadurch gekennzeichnet ist, dass**
die Kontakteinheit (20) ein normalerweise offener Kontakt ist, der während einer Betriebszeit geschlossen ist;
Durchführen des Einschaltvorgangs durch die Kontakteinheit (20) auf der Basis eines Betriebssignals, das durch die Messeinheit (10) erzeugt wird, und Aufrechterhalten des eingeschalteten Zustands durch die Kontakteinheit (20) auf der Basis eines Signals, das durch die Steuereinheit (200) erzeugt wird;
wobei dann, wenn durch die Messeinheit (10) oder die Steuereinheit (200) kein Signal erzeugt wird, die Kontakteinheit (20) von dem eingeschalteten Zustand in einen offenen Zustand zurückkehrt, so dass Leistung für die Steuereinheit (200) ausgeschaltet wird;
wobei die Messeinheit (10), die Steuereinheit (200) und die Kontakteinheit (20) mit einem ODER-Gatter verbunden sind, in dem eine Signalausgabe ausgeführt wird, wenn es ein oder mehrere Eingangssignale gibt,
wobei die Messeinheit (10) und die Steuereinheit (200) mit verschiedenen Eingängen des ODER-Gatters verbunden sind und ein Ausgang des ODER-Gatters mit der Kontakteinheit (20) verbunden ist, und
wobei dann, wenn die Messeinheit (10) oder die Steuereinheit (200) ein Signal erzeugt, die Kontakteinheit (20) den Einschaltvorgang durchführt.

8. Verfahren nach Anspruch 7, wobei das Messen einer Bewegung des Benutzers des Kochgeräts (500) die folgenden Schritte umfasst:
Messen einer Bewegung des Benutzers des Kochgeräts (500) mittels Infrarot;
Erzeugen eines Betriebssignals, das sich auf die Steuerung des eingeschalteten Zustands der Kontakteinheit (20) in Übereinstimmung mit dem Messergebnis bezieht; und
Übertragen des Betriebssignals an die Kontakteinheit (20).

9. Verfahren nach Anspruch 8, wobei beim Erzeugen des Betriebssignals, dann, wenn eine Bewegung des Benutzers des Kochgeräts (500) für eine festgelegte Zeitspanne gemessen wird, das Betriebssignal erzeugt wird.

10. Verfahren nach einem der Ansprüche 7 bis 9, wobei das Steuern des Betriebs der Kontakteinheit (20) die folgenden Schritte umfasst:
Erzeugen eines Haltesignals bezüglich der Steuerung, um den eingeschalteten Zustand der Kontakteinheit (20) aufrechtzuerhalten; und
Übertragen des Haltesignals an die Kontakteinheit (20).

11. Verfahren nach einem der Ansprüche 7 bis 10, wobei das Aufrechterhalten der Ansteuerung der Kocheinheit (300) und der Steuereinheit (200) die folgenden Schritte umfasst:
Steuern eines Betriebs der Kocheinheit (300) durch die Steuereinheit (200); und
Steuern durch die Steuereinheit (200), dass die Kontakteinheit (20) den eingeschalteten Zustand aufrechterhält, während der Betrieb der Kocheinheit (300) gesteuert wird.

## Revendications

1. Système (400) pour piloter un appareil de cuisson (500), le système (400) comportant :
une unité de pilotage (100) incluant une unité de détection (10) configurée pour détecter un mouvement d'un utilisateur d'un appareil de cuisson (500) et une unité de contact (20) configurée pour commuter un circuit de puissance auquel de l'énergie est fournie depuis l'extérieur et réaliser une manœuvre de fermeture sur la base d'un résultat de détection provenant de l'unité de détection (10) pour permettre de fournir de l'énergie à l'appareil de cuisson (500) ; et
une unité de commande (200) configurée pour être pilotée par l'énergie fournie par l'intermédiaire du circuit de puissance pour commander un fonctionnement de l'unité de contact (20),
**caractérisé en ce que**
l'unité de contact (20) est un contact normalement ouvert qui est fermé à un instant de manoeuvre ;
l'unité de contact (20) est configurée pour réaliser la manoeuvre de fermeture sur la base d'un signal de manoeuvre généré par l'unité de détection (10) et pour maintenir la manoeuvre de fermeture sur la base d'un signal généré par l'unité de commande (200) ;
dans lequel lorsqu'aucun signal n'est généré par l'unité de détection (10) ou l'unité de commande (200), l'unité de contact (20) est ramenée de la manoeuvre de fermeture à un état ouvert de sorte que l'énergie de l'unité de commande (200) est coupée ;
dans lequel l'unité de détection (10), l'unité de commande (200) et l'unité de contact (20) sont reliées à une porte OU dans laquelle une sortie est réalisée lorsqu'il y a une ou plusieurs entrées,
dans lequel l'unité de détection (10) et l'unité de commande (200) sont reliées à différentes entrées de la porte OU, et une sortie de la porte OU est reliée à l'unité de contact (20), et
dans lequel lorsque l'unité de détection (10) ou l'unité de commande (200) génère un signal, l'unité de contact (20) réalise la manoeuvre de fermeture.

2. Système (400) selon la revendication 1, dans lequel l'unité de détection (10) est positionnée sur une partie avant de l'appareil de cuisson (500), détecte par infrarouge un mouvement de l'utilisateur de l'appareil de cuisson (500) et génère le signal de manoeuvre concernant la commande de la manoeuvre de fermeture de l'unité de contact (20) en fonction du résultat de détection.

3. Système (400) selon l'une des revendications 1 et 2, dans lequel lorsqu'un mouvement de l'utilisateur de l'appareil de cuisson (500) est détecté pendant une période de temps prédéterminée, l'unité de détection (10) génère le signal de manœuvre.

4. Appareil de cuisson (500) comportant :
le système (400) selon l'une des revendications 1 à 3 ; et
une unité de cuisson (300) configurée pour réaliser une opération de cuisson de l'appareil de cuisson (500).

5. Appareil de cuisson (500) selon la revendication 4, dans lequel après que l'unité de commande (200) est pilotée par de l'énergie fournie par l'intermédiaire du circuit de puissance, l'unité de commande (200) commande l'unité de contact (20) de manière à maintenir la manoeuvre de fermeture, et lorsque le pilotage de l'unité de commande (200) est maintenu en maintenant l'énergie fournie par le circuit de puissance, l'unité de commande (200) commande un fonctionnement de l'appareil de cuisson (500).

6. Appareil de cuisson (500) selon la revendication 5, dans lequel lorsque l'unité de commande (200) commande le fonctionnement de l'appareil de cuisson (500), l'unité de commande (200) commande l'unité de contact (20) de manière à maintenir la manoeuvre de fermeture.

7. Procédé pour piloter un appareil de cuisson (500) incluant : une unité de pilotage (10) incluant une unité de détection (10) configurée pour détecter un mouvement d'un utilisateur d'un appareil de cuisson (500) et une unité de contact (20) configurée pour commuter un circuit de puissance auquel de l'énergie est fournie depuis l'extérieur ; une unité de cuisson (300) configurée pour réaliser une opération de cuisson de l'appareil de cuisson (500) ; et une unité de commande (200) configurée pour être pilotée par de l'énergie fournie par le circuit de puissance pour commander des manœuvres de l'unité de contact (20) et de l'unité de cuisson (200), le procédé comportant les étapes consistant à :
détecter, par l'unité de détection (10), un mouvement d'un utilisateur de l'appareil de cuisson (500) ;
réaliser, par l'unité de contact (20), une manoeuvre de fermeture sur la base du résultat de détection ;
piloter l'unité de cuisson (300) et l'unité de commande (200) avec de l'énergie fournie par le circuit de puissance ;
commander, par l'unité de commande (200), une manoeuvre de l'unité de contact (20) pour maintenir la manoeuvre de fermeture ; et
maintenir le pilotage de l'unité de cuisson (300) et de l'unité de commande (200) en maintenant l'énergie fournie par le circuit de puissance,
le procédé étant **caractérisé en ce que**
l'unité de contact (20) est un contact normalement ouvert qui se ferme à un instant de manoeuvre ;
réaliser, par l'unité de contact (20), la manoeuvre de fermeture sur la base d'un signal de manoeuvre généré par l'unité de détection (10) et maintenir, par l'unité de contact (20), la manoeuvre de fermeture sur la base d'un signal généré par l'unité de commande (200) ;
dans lequel lorsqu'aucun signal n'est généré par l'unité de détection (10) ou l'unité de commande (200), ramener l'unité de contact (20) de la manoeuvre de fermeture à un état ouvert de sorte que l'énergie de l'unité de commande (200) est coupée ;
dans lequel l'unité de détection (10), l'unité de commande (200) et l'unité de contact (20) sont reliées à une porte OU dans laquelle une sortie est réalisée lorsqu'il y a une ou plusieurs entrées,
dans lequel l'unité de détection (10) et l'unité de commande (200) sont reliées à différentes entrées de la porte OU, et une sortie de la porte OU est reliée à l'unité de contact (20), et
dans lequel lorsque l'unité de détection (10) ou l'unité de commande (200) génère un signal, l'unité de contact (20) réalise la manœuvre de fermeture.

8. Procédé selon la revendication 7, dans lequel la détection d'un mouvement de l'utilisateur de l'appareil de cuisson (500) comporte les étapes consistant à :
détecter par infrarouge un mouvement de l'utilisateur de l'appareil de cuisson (500) ;
générer un signal de manœuvre concernant la commande de la manœuvre de fermeture de l'unité de contact (20) en fonction du résultat de détection ; et
transmettre le signal de manœuvre à l'unité de contact (20).

9. Procédé selon la revendication 8, dans lequel, pendant la génération du signal de manœuvre, lorsqu'un mouvement de l'utilisateur de l'appareil de cuisson (500) est détecté pendant une période de temps prédéterminée, le signal de manœuvre est généré.

10. Procédé selon l'une des revendications 7 à 9, dans lequel la commande du fonctionnement de l'unité de contact (20) comporte les étapes consistant à :
générer un signal d'entretien concernant la commande du maintien de la manœuvre de fermeture de l'unité de contact (20) ; et
transmettre le signal d'entretien à l'unité de contact (20).

11. Procédé selon l'une des revendications 7 à 10, dans lequel le maintien du pilotage de l'unité de cuisson (300) et de l'unité de commande (200) comporte les étapes consistant à :
commander, par l'unité de commande (200), un fonctionnement de l'unité de cuisson (300) ; et
commander, par l'unité de commande (200), l'unité de contact (20) de manière à maintenir la manœuvre de fermeture, tout en commandant le fonctionnement de l'unité de cuisson (300).
